# FASCICULE DE BREVET EUROPEEN

(11) **EP 2 067 842 B1**
(45) Date de publication et mention de la délivrance du brevet: **09.01.2013**
(21) Numéro de dépôt: 08291068.8
(22) Date de dépôt: 13.11.2008
(51) Int. Cl.: C10L 1/02, C10L 1/16

(54) **Compositions de carburant à forte teneur en éthanol**
Kraftstoffzusammensetzung mit hohem Ethanolgehalt
Fuel compositions with high ethanol content

(30) Priorité: 30.11.2007 FR 0708375
(43) Date de publication de la demande: 10.06.2009
(73) Titulaire: IFP Energies nouvelles, 92852 Rueil-Malmaison Cedex (FR)
(72) Inventeur: Montagne, Xavier, 92500 Rueil Malmaison (FR); Lecointe, Bertrand, 78510 Triel sur Seine (FR); Pidol, Ludivine, 94230 Cachan (FR)

(56) Documents cités:
- WO-A-2007/145490
- DE-C1- 4 116 905
- DE-C1- 4 333 418
- US-A- 4 509 953
- US-A1- 2003 126 790

## Description

### Domaine de l'invention:

L'invention s'inscrit dans le contexte de la recherche de nouveaux biocarburants, dans l'objectif de réduire les émissions de CO2 et de diversifier les ressources énergétiques. Les principaux biocarburants utilisés sont l'éthanol (pur ou en mélange) pour les moteurs à allumage commandé et le biodiesel (pur ou en mélange) pour les moteurs à allumage par compression. En Europe, la part de marché des véhicules diesel est très importante, ce qui implique des importations de gazole et des exportations d'essence. Un des axes de recherche innovant actuel est d'arriver à intégrer l'éthanol dans un carburant de type gazole pour une application moteur Diesel.

### Examen de l'art antérieur:

L'incorporation directe d'éthanol dans le gazole ou l'essence (voir les documents DE 4333418, US 4509953 ou DE 4116905) est aujourd'hui limitée en raison de la faible miscibilité de l'éthanol et d'une base gazole (ou essence). Les mélanges sont donc limités à un taux d'incorporation d'environ 3% en volume d'éthanol ou bien nécessitent l'utilisation de co-solvants. La demande de brevet FR-A-2 895 418 déposée au nom de la Demanderesse propose d'utiliser les esters méthyliques d'huile végétale (EMHV) comme co-solvant. Ainsi la composition de carburant Diesel décrite dans cette demande de brevet permet d'incorporer de 10 à 30% en volume d'éthanol dans une base carburant.

De plus, une variante constituée d'huiles fortement hydrotraitées permet d'améliorer l'indice de cétane diminué de fait par la présence d'éthanol.

Une autre solution envisagée pour augmenter la teneur en éthanol incorporable dans le gazole consiste à utiliser un additif tensioactif permettant de maintenir l'éthanol en suspension dans le gazole créant ainsi une microémulsion.

Toutefois, dans tous ces cas, la présence d'éthanol dans les mélanges modifie de façon importante les valeurs du point d'éclair, défini comme étant la température la plus basse où la concentration des vapeurs émises est suffisante pour produire une déflagration au contact d'une flamme ou d'un point chaud, mais reste insuffisante pour s'autoenflammer, combustion spontanée en l'absence de la flamme "pilote". Le point d'éclair sert ainsi à classer les liquides dans des catégories particulières en fonction de leurs risques d'inflammation. Ainsi, on distingue les liquides inflammables de classe I (point d'éclair inférieur à 55°C) des liquides inflammables de classe II (point d'éclair supérieur à 55°C). Les conditions de stockage, de manipulation et de distribution sont bien évidemment différentes selon la classe à laquelle appartient le carburant.
Le tableau suivant (Tableau 1) donne les valeurs des points d'éclairs de quelques produits :

**Tableau 1**

| Produits | Point d'éclair | catégorie de carburant |
|---|---|---|
| essence | <-25°C | classe I |
| kérosène | >38°C | classe I |
| gazole pétrolier | >55°C | classe II |
| éthanol | ∼13°C | classe I |
| ester méthylique de colza | >120°C | classe II |

Or, le point d'éclair des mélanges est imposé par le produit le plus volatile, et ceci dès que sa présence atteint quelques pourcents (Hansen A.C. et al. Bioressource Technology, 2005 96 (3) 277). Ainsi, l'incorporation de quelques pourcents d'éthanol dans les mélanges conduit rapidement à réduire le point d'éclair des mélanges pour l'amener à celui de l'éthanol, c'est à dire autour de 13°C. Les carburants gazoles en mélange avec de l'éthanol ne font donc plus partie de la classe II mais sont comparables aux carburants de classe I.

Cependant, les valeurs de points d'éclair atteintes sont critiques et l'emploi d'éthanol dans le gazole risque de provoquer au dessus du liquide l'existence d'un système inflammable : ces mélanges se placent alors dans des zones à risque concernant l'explosivité. En effet, dans le cas des essences où le point d'éclair est très bas, le ciel gazeux du réservoir du véhicule est constitué d'un mélange air-carburant trop riche pour s'enflammer. Dans les véhicules Diesel, compte tenu de la faible volatilité du gazole, le ciel gazeux est au contraire constitué d'un mélange trop pauvre. Une solution envisagée quand les mélanges sont à base de gazole et d'éthanol consiste à équiper tous les réservoirs de véhicules et les cuves de stockage d'un système étanche et d'un équipement arrêt de flamme. Cette solution présente l'inconvénient d'entraîner des modifications et des adaptations du véhicule lui même.

Une solution consistant à améliorer directement la formulation du carburant de façon à obtenir des mélanges possédant un point d'éclair acceptable avec les conditions d'utilisation et de stockage du carburant, sans nécessiter de modifications du moteur, apparaît plus prometteuse. C'est dans ce cadre que s'inscrit la présente invention.

### Résumé de l'invention:

La présente invention propose de formuler un carburant diesel à forte teneur en éthanol présentant une valeur de point d'éclair largement en deçà de la température ambiante et se rapprochant des valeurs obtenues pour les essences standards. Ainsi, ces compositions de carburant sortent des zones à risque au niveau de l'explosivité.

### Description détaillée de l'invention:

L'invention décrite dans la présente demande de brevet a pour objet de proposer une composition de carburant diesel permettant l'incorporation directe de fortes quantités d'éthanol accompagnée d'une diminution importante du point d'éclair du mélange obtenu gazole-biodiesel-éthanol. Cette diminution de la valeur du point d'éclair est obtenue en ajoutant au mélange un composé liquide encore plus volatil que l'éthanol, ayant un point d'éclair inférieur à -4°C.

La composition de carburant diesel selon la présente invention est caractérisée en ce qu'elle comprend un mélange constitué de :
- 10 à 30 % en volume d'éthanol ;
- 20 à 60 % en volume d'un mélange d'esters alkyliques d'huile végétale ;
- 30 à 60% en volume d'au moins une base gazole ou coupe gazole; et
- 1 à 15% en volume d'un composé léger liquide ayant un point d'éclair inférieur à -4°C
et en ce qu'elle a un point d'éclair inférieur à 6°C.

Un autre objet de la présente invention est l'utilisation directe de cette composition de carburant diesel sur véhicule Diesel et particulièrement dans le cadre de flotte captive.

Ainsi, ladite composition a un point d'éclair inférieur à celui de l'éthanol et donc acceptable avec les conditions de stockage et d'utilisation du carburant. Une telle composition permet de sortir des zones à risque d'explosivité, en limitant l'existence d'un système inflammable au dessus du liquide. En se rapprochant du point d'éclair des essences, le ciel gazeux du réservoir du véhicule est constitué d'un mélange air-carburant trop riche pour s'enflammer.

De façon préférée, ladite composition selon la présente invention a un point d'éclair inférieur à 6°C. De façon encore plus préférée, ladite composition a un point d'éclair inférieur à 0°C.

Le composé liquide ayant un point d'éclair inférieur à -4°C est préférentiellement une coupe paraffinique en C5 à C7. L'incorporation d'une telle coupe permet, outre la diminution de la valeur du point d'éclair du mélange, de valoriser, au sein de la raffinerie, une fraction des coupes légères via le pool gazole.

Les valeurs des points d'éclair de composés issus d'une coupe paraffinique en C5-C7 sont données dans le tableau suivant (Tableau 2) :

| produits | point d'éclair | température d'ébullition |
|---|---|---|
| n-pentane | -49°C | 36°C |
| iso-pentane | < -51°C | 28°C |
| n-hexane | -22°C | 68°C |
| iso-hexane | -32°C | 60°C |
| cyclohexane | -20°C | 81°C |
| n-heptane | -4°C | 98°C |
| iso-heptane | -18°C | 90°C |

De façon préférée, les coupes paraffiniques en C5-C7 utilisées dans les mélanges selon la présente invention sont choisies parmi l'iso-pentane et l'isohexane.

Préférentiellement, les compositions de carburant comprennent entre 4 et 12% en volume de composé liquide léger ayant un point d'éclair inférieur à -4°C.

La base ou coupe gazole présente dans la composition de carburant diesel selon l'invention représente de 30 à 60 % en volume, de préférence de 35 à 45% en volume de la composition totale en carburant. Cette base est choisie parmi les coupes gazoles conventionnelles issues du raffinage, les coupes issues de l'hydrocraquage, les carburants de synthèse obtenus à partir de ressources telles que le gaz naturel, le charbon et la biomasse et les huiles végétales très fortement hydrotraitées (un hydrotraitement poussé des huiles permet d'obtenir des charges exclusivement paraffiniques ne comprenant plus d'insaturations). Ces différentes bases permettent de disposer d'une courbe de distillation proche de celle d'un gazole et également de combler le déficit de cétane lié à la forte teneur en éthanol dans le mélange.

La présence d'esters alkyliques (par exemple méthyliques EMHV ou éthyliques EEHV) d'huile végétale a l'avantage d'assurer le rôle de comptabilisant de l'éthanol. La teneur en esters alkyliques est comprise entre 20 et 60% en volume, en fonction de la teneur en éthanol que l'on souhaite introduire dans le mélange. De façon préférée, la teneur en esters alkyliques est comprise entre 24 et 50% en volume par rapport à la composition totale du carburant selon l'invention.

La composition de carburant diesel comprend de 10 à 30 % en volume d'éthanol, et préférentiellement de 15 à 25% en volume d'éthanol. Afin de limiter les problèmes de démixtion, on utilise de façon préférée de l'éthanol anhydre.

Selon un mode préféré, la composition de carburant selon la présente invention consiste essentiellement en un mélange constitué de
- 15 à 25 % en volume d'éthanol ;
- 24 à 50 % en volume d'un mélange d'esters alkyliques d'huile végétale ;
- 30 à 60% en volume d'au moins une base gazole ou coupe gazole; et
- 4 à 12% en volume d'un composé liquide ayant un point d'éclair inférieur à -4°C.

Le carburant diesel peut également contenir des additifs couramment utilisés pour la formulation et l'utilisation des gazoles, tels que des additifs améliorant les caractéristiques à froid, des additifs pro-cétane, antioxydants, détergents ou des additifs anti-mousse ou encore améliorant la lubricité.

La formulation de la composition de carburant est mise en oeuvre, de façon préférée, en réalisant dans un premier temps le mélange des esters alkyliques avec l'éthanol, l'ester jouant alors de rôle de co-solvant entre l'alcool et la base hydrocarbonée. Dans un deuxième temps, on incorpore à ce pré-mélange la base ou coupe gazole et le composé liquide léger ayant un point d'éclair inférieur à -4°C. De cette façon, on limite les phénomènes de démixtion, et on assure une meilleure stabilité dans le temps des mélanges obtenus.

L'exemple suivant illustre l'invention sans en limiter la portée.

### Exemple

On réalise un premier mélange A comprenant 20 % en volume d'éthanol, 40% en volume d'esters méthyliques d'huile de colza et 40% en volume de gazole de synthèse. La mesure du point d'éclair réalisée par la méthode ABEL (EN ISO 13736), adaptée aux faibles valeurs de point d'éclair, donne une valeur se situant autour de 14,5°C. Cette valeur servira de référence pour les mélanges présentés ci-après et contenant une proportion variable de coupes paraffiniques en C5-C7.

Le tableau 3 donne les valeurs de point d'éclair pour différentes compositions de carburant selon la présente invention. Dans les mélanges B1, B2 et B3 on a incorporé de l'iso-pentane et dans les mélanges C1, C2, C3 et C4 , la coupe paraffinique introduite est de l'iso-hexane.

**Tableau 3**

| Mélanges | Ethanol (% vol) | Esters méthyliques d'huile de colza (% vol) | Gazole de synthèse (% vol) | Coupe paraffine C5-C7 (% vol) | Point d'éclair (°C) |
|---|---|---|---|---|---|
| A | 20 | 40 | 40 | - | 14,5 |
| B1 | 20 | 40 | 38 | 2 | -2,5 |
| B2 | 20 | 40 | 35 | 5 | < -17 |
| B3 | 20 | 40 | 30 | 10 | < -17 |
| C1 | 20 | 40 | 38 | 2 | 5,5 |
| C2 | 20 | 40 | 35 | 5 | -3 |
| C3 | 20 | 40 | 33 | 7 | -8 |
| C4 | 20 | 40 | 30 | 10 | <-17 |

L'introduction d'iso-pentane ou d'iso-hexane dans la composition permet donc d'abaisser de façon importante les valeurs du point d'éclair du carburant et de sortir des zones à risque au niveau de l'explosivité.

## Revendications

1. Composition de carburant diesel à forte teneur en éthanol, **caractérisée en ce qu'**elle comprend un mélange constitué de :
- 10 à 30% en volume d'éthanol ;
- 20 à 60% en volume d'un mélange d'esters alkyliques d'huile végétale ;
- 30 à 60 % en volume d'au moins une base ou une coupe gazole ; et
- 1 à 15 % en volume d'une coupe paraffinique en C5-C7 ayant un point d'éclair inférieur à -4°C
et **en ce qu'**elle a un point d'éclair inférieur à 6°C.

2. Composition selon la revendication 1, **caractérisée en ce qu'**elle comprend un mélange constitué de :
- 15 à 25 % en volume d'éthanol ;
- 24 à 50 % en volume d'un mélange d'esters alkyliques d'huile végétale ;
- 30 à 60% en volume d'au moins une base gazole ou coupe gazole; et
- 4 à 12% en volume d'une coupe paraffinique en C5-C7 ayant un point d'éclair inférieur à -4°C.

3. Composition selon l'une des revendications 1 ou 2, **caractérisée en ce que** ladite coupe C5-C7 est l'iso-pentane ou l'iso-hexane.

4. Composition selon l'une des revendications 1 à 3, **caractérisée en ce que** la base ou coupe gazole est choisie parmi les coupes gazoles conventionnelles issues du raffinage, les coupes issues de l'hydrocraquage, les carburants de synthèse obtenus à partir de ressources telles que le gaz naturel, le charbon et la biomasse et les huiles végétales très fortement hydrotraitées constituées de charges exclusivement paraffiniques ne comprenant plus d'insaturations.

5. Composition selon l'une des revendications 1 à 4, **caractérisée en ce qu'**elle comprend en outre au moins un additif choisi parmi les additifs permettant d'améliorer les caractéristiques à froid, les additifs pro-cétane, antioxydants, détergents ou des additifs anti-mousse ou encore améliorant la lubricité.

6. Utilisation directe d'une composition de carburant diesel selon l'une des revendications 1 à 5 sur véhicule diesel et en particulier dans le cas de flotte captive.

## Claims

1. A high ethanol-content diesel fuel composition, **characterized in that** it comprises a mixture made up of:
- 10 to 30% by volume of ethanol,
- 20 to 60% by volume of a mixture of vegetable oil alkyl esters,
- 30 to 60% by volume of at least one gas oil base or cut, and
- 1 to 15% by volume of a C5-C7 paraffinic cut having a flash point below -4°C.

2. A composition as claimed in claim 1, **characterized in that** it comprises a mixture made up of:
- 15 to 25% by volume of ethanol,
- 24 to 50% by volume of a mixture of vegetable oil alkyl esters,
- 30 to 60% by volume of at least one gas oil base or cut, and
- 4 to 12% by volume of a C5-C7 paraffinic cut having a flash point below -4°C.

3. A composition as claimed in any one of claims 1 or 2, **characterized in that** said C5-C7 cut is iso-pentane or iso-hexane.

4. A composition as claimed in any one of claims 1 to 3, **characterized in that** the gas oil base or cut is selected from among conventional gas oil cuts obtained from refining, cuts obtained from hydrocracking, synthetic fuels obtained from resources such as natural gas, coal and biomass, and very highly hydrotreated vegetable oils consisting of exclusively paraffinic feedstocks comprising no unsaturations any more.

5. A composition as claimed in any one of claims 1 to 4, **characterized in that** it also comprises at least one additive selected from among additives improving the cold resistance characteristics, procetane additives, antioxidant additives, detergent additives, antifoam additives or lubricity-improving additives.

6. Direct use of a diesel fuel composition as claimed in any one of claims 1 to 5 in a diesel vehicle and in particular in the case of a captive fleet.

## Patentansprüche

1. Dieselkraftstoffzusammensetzung mit hohem Ethanolgehalt, **dadurch gekennzeichnet, dass** sie eine Mischung umfasst, die aus Folgendem besteht:
- 10 bis 30 Volumen-% an Ethanol;
- 20 bis 60 Volumen-% einer Mischung von Pflanzenöl-Alkylestern;
- 30 bis 60 Volumen-% mindestens einer Dieselgrundlage oder - fraktion; und
- 1 bis 15 Volumen-% einer C5-C7-Paraffinfraktion mit einem Flammpunkt von weniger als -4 °C
und dadurch, dass sie einen Flammpunkt von weniger als 6 °C hat.

2. Zusammensetzung nach Anspruch 1, **dadurch gekennzeichnet, dass** sie eine Mischung umfasst, die aus Folgendem besteht:
- 15 bis 25 Volumen-% an Ethanol;
- 24 bis 50 Volumen-% einer Mischung von Pflanzenöl-Alkylestern;
- 30 bis 60 Volumen-% mindestens einer Dieselgrundlage oder - fraktion; und
- 4 bis 15 Volumen-% einer C5-C7-Paraffinfraktion mit einem Flammpunkt von weniger als -4 °C

3. Zusammensetzung nach einem der Ansprüche 1 oder 2, **dadurch gekennzeichnet, dass** es sich bei der C5-C7-Fraktion um Isopentan oder Isohexan handelt.

4. Zusammensetzung nach einem der Ansprüche 1 bis 3, **dadurch gekennzeichnet, dass** die Dieselgrundlage oder -fraktion aus den herkömmlichen Dieselfraktionen, welche aus der Raffination stammen, den Fraktionen, welche aus dem Hydrocrackvorgang stammen, den synthetischen Kraftstoffen, welche aus Ressourcen wie etwa Erdgas, Kohle und Biomasse gewonnen werden, und den sehr stark hydrobehandelten Pflanzenölen, welche aus Chargen bestehen, die ausschließlich paraffinartig sind und keine ungesättigten Bindungen aufweisen, ausgewählt ist.

5. Zusammensetzung nach einem der Ansprüche 1 bis 4, **dadurch gekennzeichnet, dass** sie darüber hinaus mindestens ein Additiv umfasst, das aus den Additiven, welche die Eigenschaftsmerkmale in der Kälte verbessern, den cetanzahlverbessernden Additiven, den Antioxidantien, den Tensiden oder den Additiven, welche schaumverhütend wirken oder auch die Schmierwirkung verbessern, ausgewählt ist.

6. Direkte Verwendung einer Dieselkraftstoffzusammensetzung nach einem der Ansprüche 1 bis 5 bei einem Dieselfahrzeug und insbesondere im Falle eines Fuhrparks, der nicht über das öffentliche Tankstellennetz versorgt wird.
